(19) Europäisches Patentamt
European Patent Office
Office européen des brevets

(11) **EP 4 535 067 A1**

(12) **EUROPEAN PATENT APPLICATION**
published in accordance with Art. 153(4) EPC

(43) Date of publication:
**09.04.2025 Bulletin 2025/15**

(21) Application number: **23815741.6**

(22) Date of filing: **15.05.2023**

(51) International Patent Classification (IPC):
**G02B 30/56** (2020.01)

(52) Cooperative Patent Classification (CPC):
**G02B 30/56**

(86) International application number:
**PCT/JP2023/018048**

(87) International publication number:
**WO 2023/233981 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.06.2022 JP 2022089616**

(71) Applicant: **Toppan Holdings Inc.
Tokyo 110-0016 (JP)**

(72) Inventor: **DAIKU, Yasuhiro
Tokyo 110-0016 (JP)**

(74) Representative: **TBK
Bavariaring 4-6
80336 München (DE)**

(54) **AERIAL DISPLAY DEVICE**

(57) An aerial display apparatus includes: a display device configured to display an image; an alignment control device arranged to receive light emitted from the display device and configured to refract the light emitted from the display device in an oblique direction to a normal direction orthogonal to a plane; and an optical device arranged to receive the light emitted from the alignment control device and configured to reflect the light emitted from the alignment control device to a side opposite to the alignment control device to form an aerial image in an aerial space.

FIG. 2

**Description**

FIELD

The present invention relates to an aerial display apparatus.

BACKGROUND

Aerial display apparatuses capable of displaying still images, moving images, and the like as aerial images have been developed, and are expected to serve as new human-machine interfaces. For instance, an aerial display apparatus includes a dihedral corner reflector array, in which dihedral corner reflectors are arranged into an array, and reflects light emitted from the display surface of a display device to thereby form a real image in the air. With the display method adopting a dihedral corner reflector array, a real image (aerial image) can be displayed at a plane-symmetric position without an aberration.

Patent Document 1 discloses an optical device using transparent quadrangular prisms that protrude from the surface of a flat transparent plate as dihedral corner reflectors, in which the quadrangular prisms are arranged into an array on a plane. Patent Document 2 discloses an optical device in which first and second light control panels, each of which is formed by vertically aligning a large number of strip-shaped planar light reflecting portions at a fixed pitch inside a flat transparent plate, are arranged in such a manner that the planar light reflecting portions of the two panels are orthogonal to each other. In the optical devices disclosed in Patent Documents 1 and 2, the light emitted from the display device is reflected twice upon the orthogonally arranged reflection surfaces to produce an aerial image.

On display apparatuses adopting the optical device of Patent Document 1 or 2, one can recognize an aerial image through an observation from an oblique direction of the optical device. It is difficult, however, to clearly recognize an aerial image when observed from the direction of the normal to the optical device.

CITATION LIST

PATENT LITERATURE

Patent Document 1: Jpn. Pat. Appln. KOKAI Publication No. 2011-191404
Patent Document 2: Jpn. Pat. Appln. KOKAI Publication No. 2011-175297

SUMMARY

TECHNICAL PROBLEM

The present invention is to provide an aerial display apparatus capable of improving a display quality.

SOLUTION TO PROBLEM

A first aspect of the present invention provides an aerial display apparatus comprising:

a display device configured to display an image;
an alignment control device arranged to receive light emitted from the display device and configured to refract the light emitted from the display device in an oblique direction to a normal direction orthogonal to a plane; and
an optical device arranged to receive the light emitted from the alignment control device and configured to reflect the light emitted from the alignment control device to a side opposite to the alignment control device to form an aerial image in an aerial space.

A second aspect of the present invention provides the aerial display apparatus according to the first aspect, wherein
the alignment control device transmits a portion of a light component that is in an angular range including the normal direction among the light emitted from the display device.

A third aspect of the present invention provides the aerial display apparatus according to the second aspect, wherein

the alignment control device includes a planar first base member, a plurality of first optical elements provided below the first base member, each extending in a first direction and aligned in a second direction orthogonal to the first direction, and a plurality of light shielding layers each provided on the first optical elements and configured to shield light, each of the first optical elements has a refractive surface and a light shielding surface which are inclined with respect to the normal direction and are in contact with each other, and

each of the light shielding layers is provided on the light shielding surface.

A fourth aspect of the present invention provides the aerial display apparatus according to the third aspect, wherein

an angle of the refractive surface is larger than an angle of the light shielding surface.

A fifth aspect of the present invention provides the aerial display apparatus according to the first aspect, wherein the optical device reflects light incident from the alignment control device in the oblique direction in the normal direction.

A sixth aspect of the present invention provides the aerial display apparatus according to the fifth aspect, wherein

the optical device includes a planar second base member, and a plurality of second optical elements provided below the second base member, each extending in a first direction and aligned in a second direction orthogonal to the first direction, and

each of the second optical elements has an incident surface and a reflection surface which are inclined with respect to the normal direction and are in contact with each other.

A seventh aspect of the present invention provides the aerial display apparatus according to the first aspect, wherein

the display device, the alignment control device, and the optical device are arranged in parallel to each other.

An eighth aspect of the present invention provides the aerial display apparatus according to the first aspect, further comprising a lighting device configured to produce light,

wherein the display device is arranged to receive light from the lighting device and is configured by a liquid crystal display device.

ADVANTAGEOUS EFFECTS OF INVENTION

According to the present invention, an aerial display apparatus capable of improving a display quality can be provided.

BRIEF DESCRIPTION OF THE DRAWINGS

FIG. 1 is a perspective view of an aerial display apparatus according to the embodiment of the present invention.
FIG. 2 is an XZ-plane side view illustrating the aerial display apparatus shown in FIG. 1.
FIG. 3 is a perspective view of an alignment control device shown in FIG. 1.
FIG. 4 is an XZ-plane side view of the alignment control device shown in FIG. 2.
FIG. 5 is a diagram illustrating angles of a refractive surface and a light shielding surface in the alignment control device.
FIG. 6 is a perspective view of an optical device shown in FIG. 1.
FIG. 7 is a block diagram of the aerial display apparatus.
FIG. 8 is a perspective view illustrating the state of light reflection on the optical device.
FIG. 9 is an XZ-plane side view illustrating the state of light reflection on the optical device.
FIG. 10 is a YZ-plane side view illustrating the state of light reflection on the optical device.
FIG. 11 is a diagram illustrating angular conditions of an incident surface and a reflection surface of the optical device.
FIG. 12 is a ray tracing diagram of the aerial display apparatus.
FIG. 13 is a graph illustrating a light distribution characteristic of the display device.
FIG. 14 is a graph illustrating a light distribution characteristic of the alignment control device.
FIG. 15 is a graph illustrating a light distribution characteristic of the optical device.
FIG. 16 is a cross-sectional view illustrating a method of manufacturing the alignment control device.
FIG. 17 is a cross-sectional view illustrating a method of manufacturing the alignment control device.
FIG. 18 is a cross-sectional view illustrating a method of manufacturing the alignment control device.
FIG. 19 is a cross-sectional view illustrating a method of manufacturing the alignment control device.
FIG. 20 is a cross-sectional view illustrating a method of manufacturing the alignment control device.

FIG. 21 is a cross-sectional view illustrating a method of manufacturing the alignment control device.

FIG. 22 is an XZ-plane side view of an aerial display apparatus according to the modification.

DETAILED DESCRIPTION

Embodiments will be described below with reference to the drawings. These drawings are schematically or conceptually illustrated, and the dimensions, ratios, and the like in each drawing may not always be the same as actual dimensions and ratios. Further, among the drawings illustrating the same portion, the dimensional relationships or ratios may differ from each other. In particular, the embodiments described below exemplify a device and a method that embody the technical idea of the present invention, and therefore the technical idea of the present invention should not be identified by the shape, configuration, arrangement, etc. of the structural components. In the description below, the same reference numerals are given to elements having the same functions and configurations, and redundant explanations may be omitted.

(1) Configuration of Aerial Display Apparatus 1

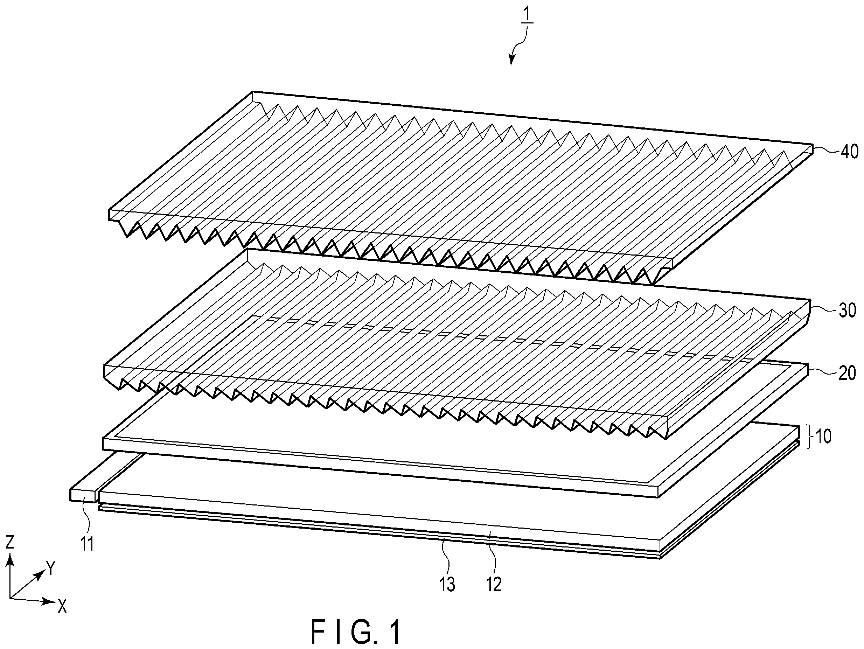

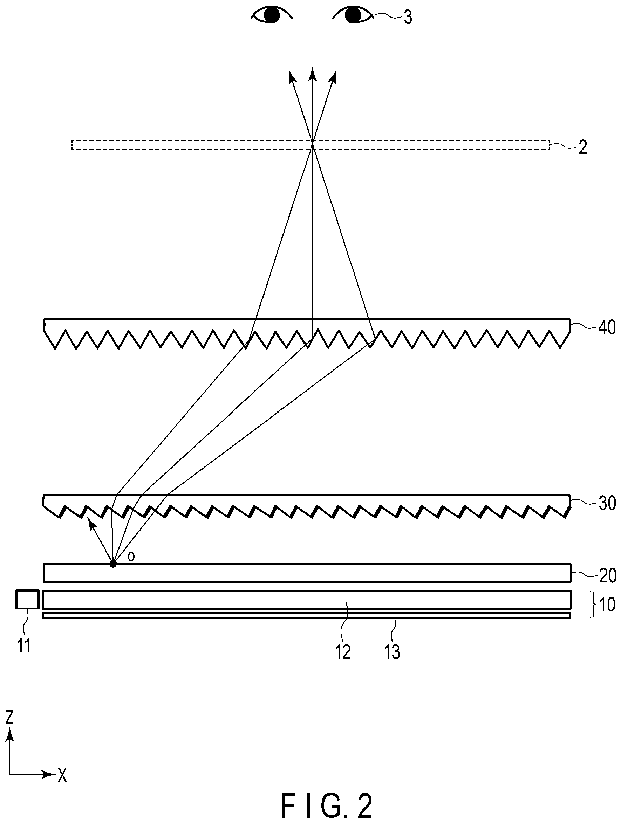

FIG. 1 is a perspective view of an aerial display apparatus 1 according to the embodiment of the present invention. In FIG. 1, the X direction represents a direction along one side of the aerial display apparatus 1, the Y direction represents a direction orthogonal to the X direction on a horizontal plane, and the Z direction represents a direction orthogonal to the XY plane (also referred to as a normal direction). FIG. 2 is an XZ-plane side view illustrating the aerial display apparatus 1 shown in FIG. 1.

The aerial display apparatus 1 denotes an apparatus that displays images (including moving images). The aerial display apparatus 1 displays an aerial image in an aerial space above the light emitting surface of the apparatus itself. The expression "displaying an aerial image" has the same meaning as "forming an aerial image". The light emitting surface of the aerial display apparatus 1 denotes an upper surface of a component disposed in the uppermost layer of multiple components that constitute the aerial display apparatus 1. An aerial image denotes a real image formed in the aerial space.

The aerial display apparatus 1 includes a lighting device (also referred to as a backlight) 10, a display device 20, an alignment control device 30, and an optical device 40. The lighting device 10, the display device 20, the alignment control device 30, and the optical device 40 are arranged in this order along the Z direction and are arranged parallel to each other. The lighting device 10, the display device 20, and the alignment control device 30, and the optical device 40 are fixed at desired positions by fixing members (not shown) with desired spaces therebetween.

The lighting device 10 produces illumination light and outputs the illumination light toward the display device 20. The lighting device 10 includes a light source unit 11, a light guide plate 12, and a reflective sheet 13. The lighting device 10 may be a sidelight-type lighting device. The lighting device 10 forms a surface light source. The lighting device 10 may be configured in such a manner that the light intensity in an oblique direction at the angle $\theta_1$ described later reaches its peak.

The light source unit 11 is disposed so as to face the side surface of the light guide plate 12. The light source unit 11 produces light toward the side surface of the light guide plate 12. The light source unit 11 includes a plurality of light emitting elements formed of, for example, a white light emitting diode (LED). The light guide plate 12 guides the illumination light from the light source unit 11 and outputs the illumination light from the upper surface thereof. The reflective sheet 13 reflects the illumination light output from the bottom surface of the light guide plate 12 toward the light guide plate 12 again. The lighting device 10 may include a member (including a prism sheet and a diffusion sheet) for improving optical characteristics on the upper surface of the light guide plate 12.

The display device 20 is a transmissive display device. The display device 20 is configured by, for example, a liquid crystal display device. The driving mode of the display device 20 is not particularly limited, and a twisted nematic (TN) mode, a vertical alignment (VA) mode, a homogeneous mode, or the like, can be used. The display device 20 receives the illumination light output from the lighting device 10. The display device 20 transmits the illumination light from the lighting device 10 and performs optical modulation. The display device 20 thereby displays a desired image on the own display surface.

The alignment control device 30 has a function of refracting incident light and reducing unnecessary light. Unnecessary light indicates light components not contributing to the production of an aerial image. The alignment control device 30 refracts light emitted from the display device 20 in a direction oblique to a normal direction orthogonal to the plane. The detailed configuration of the alignment control device 30 will be described later.

The optical device 40 reflects light incident from the bottom surface side to the upper surface side. The optical device 40 reflects light that is incident from the bottom surface side toward an oblique direction with respect to a normal direction orthogonal to the plane, for example, in a front direction (normal direction). The optical device 40 forms an aerial image 2 in the aerial space in front of the aerial display apparatus 1. The detailed configuration of the optical device 40 will be described later. The aerial image 2 is a two-dimensional image parallel to the device surface of the optical device 40. The device surface denotes a virtual plane on which the optical device 40 extends in an in-plane direction. The device surface is the same as an in-plane direction. The same applies to the device surfaces of other devices. A viewer 3 in front of the optical device 40 can visually recognize the aerial image 2.

(1-1) Configuration of Alignment Control Device 30

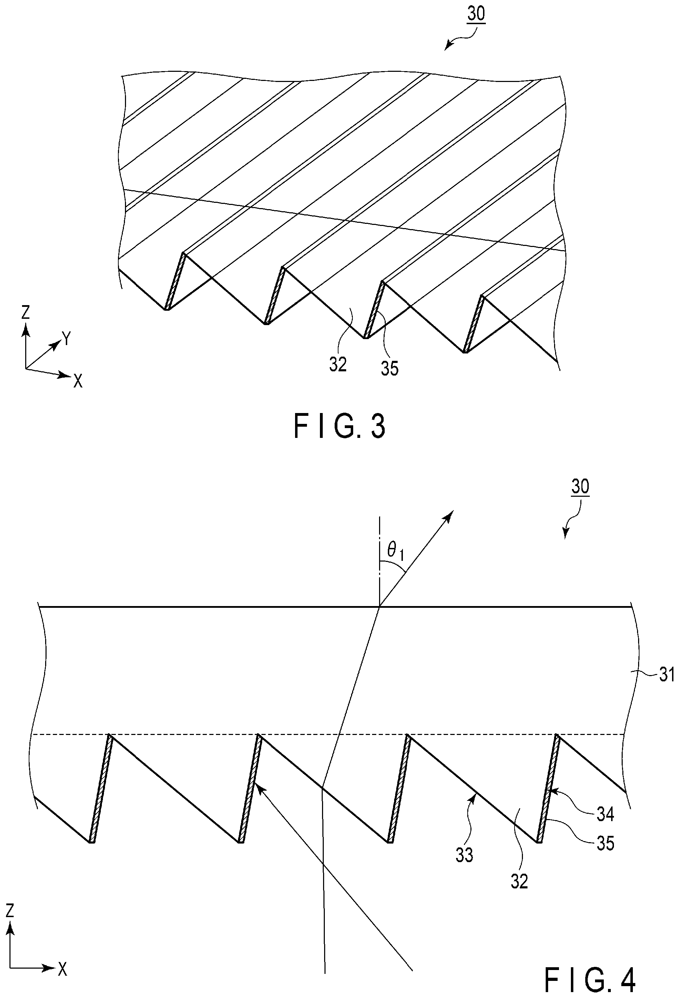

FIG. 3 is a perspective view of an alignment control device 30 shown in FIG. 1. FIG. 4 is an XZ-plane side view of the alignment control device 30 shown in FIG. 2.

The alignment control device 30 includes a base member 31, a plurality of optical elements 32, and a plurality of light shielding layers 35. The base member 31 is formed to be planar on the XY plane and has a rectangular parallelepiped shape.

A plurality of optical elements 32 are provided on the bottom surface of the base member 31. Each of the optical elements 32 is formed to be a triangular prism. The optical elements 32 are disposed such that the three side surfaces of each triangular prism extend parallel to the XY plane, with one of the side surfaces being in contact with the base member 31. The optical elements 32 each extend in the Y direction and are aligned in the X direction. In other words, the optical elements 32 form a sawtooth shape in the XZ plane.

Each of the optical elements 32 has a refractive surface 33 and a light shielding surface 34. When viewed from the Y direction, the left side surface is the refractive surface 33 and the right side surface is the light shielding surface 34. The refractive surface 33 is a surface for refracting light incident from the bottom surface side of the alignment control device 30. The light shielding surface 34 is a surface for shielding light from the bottom surface side of the alignment control device 30.

The base member 31 and the optical element 32 are formed of a transparent material. The optical elements 32 may be formed integrally with the base member 31, using the same transparent material as the base member 31. The base member 31 and the optical elements 32 may be formed separately, and the optical elements 32 may be adhered to the base member 31, using a transparent adhesive. Examples of the transparent material for the base member 31 and the optical elements 32 include glass or a transparent resin (including an acrylic resin).

In each optical element 32, the light shielding surface 34 is provided with the light shielding layer 35. The light shielding layer 35 has a function of shielding light. The light shielding layer 35 is formed of, for example, a material containing a black dye or pigment, a material containing carbon black, or a material containing graphite.

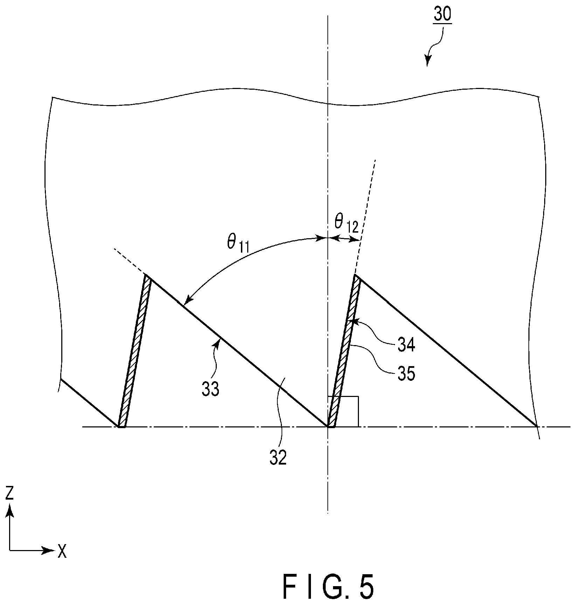

FIG. 5 is a diagram illustrating angles of the refractive surface 33 and the light shielding surface 34 in the alignment control device 30.

The refractive surface 33 is inclined at the angle $\theta_{11}$ with respect to a normal direction orthogonal to the device surface of the alignment control device 30. The light shielding surface 34 is inclined at the angle $\theta_{12}$ with respect to a normal direction orthogonal to the device surface of the alignment control device 30. The angle $\theta_{12}$ of the light shielding surface 34 has the same meaning as the inclination angle of the light shielding layer 35. The angle $\theta_{11}$ of the refractive surface 33 is set in an angular range of, for example, 45 degrees to 65 degrees. The angle $\theta_{12}$ of the light shielding surface 34 is set in an angular range of, for example, 0 degrees to 25 degrees. That is, the angle $\theta_{11}$ of the refractive surface 33 is set to be larger than the angle $\theta_{12}$ of the light shielding surface 34.

The alignment control device 30 refracts light incident from the display device 20 on the refractive surface 33 and shields light incident from the display device 20 on the light shielding layer 35. The light incident on the refractive surface 33 includes a light component traveling in a predetermined angular range including the normal direction. The light incident on the light shielding layer 35 includes a light component traveling to the left side and the right side of the angular range of incidence on the refractive surface 33. Furthermore, of the light traveling in the normal direction, a light component of a region occupied by the refractive surface 33 in a plan view is incident on the refractive surface 33, and a light component of a region occupied by the light shielding layer 35 in a plan view is incident on the light shielding layer 35. Thereby, the alignment control device 30 transmits a portion of the light component that is within a predetermined angular range including the normal direction among the light emitted from the display device 20, and shields a portion of the light component that is traveling to the left side and the right side of the predetermined angular range among the light emitted from the display device 20.

The alignment control device 30 outputs light components in a predetermined angular range defined around the angle $\theta_1$. The angle $\theta_1$ can be adjusted by optimally setting the distance between the alignment control device 30 and the display device 20, the refractive index of the alignment control device 30, the angle of the refractive surface 33, and the angle of the light shielding surface 34.

(1-2) Configuration of Optical Device 40

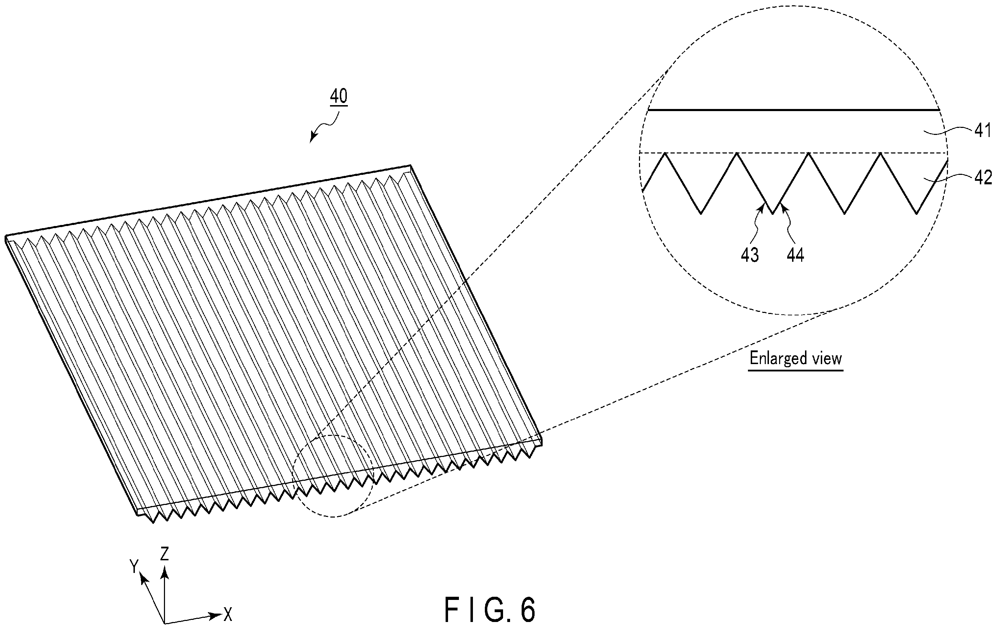

FIG. 6 is a perspective view of the optical device 40 shown in FIG. 1. FIG. 6 also shows an enlarged view showing a part of the optical device 40 in an enlarged manner. The enlarged view of FIG. 6 is a side view on the XZ plane.

The optical device 40 includes a base member 41 and a plurality of optical elements 42. The base member 41 is formed to be planar on the XY plane and has a rectangular parallelepiped shape.

A plurality of optical elements 42 are provided on the bottom surface of the base member 41. Each of the optical elements 42 is formed to be a triangular prism. The optical elements 42 are disposed such that the three side surfaces of each triangular prism extend parallel to the XY plane with one of the side surfaces being in contact with the base member 41. The optical elements 42 each extend in the Y direction and are aligned in the X direction. In other words, the optical elements 42 form a sawtooth shape in the XZ plane.

Each of the optical elements 42 has an incident surface 43 and a reflection surface 44. When viewed from the Y direction, the left side surface is the incident surface 43 and the right side surface is the reflection surface 44. Upon the incident surface 43, light from the display device 20 is incident. Upon the reflection surface 44, the light externally incident on the incident surface 43 is reflected in the interior of the optical element 42. The incident surface 43 and the reflection surface 44 have an angle $\theta_p$.

The base member 41 and the optical element 42 are formed of a transparent material. The optical elements 42 may be formed integrally with the base member 41, using the same transparent material as the base member 41. The base member 41 and the optical elements 42 may be formed separately, and the optical elements 42 may be adhered to the base member 41, using a transparent adhesive. Examples of the transparent material for the base member 41 and the optical elements 42 include glass or a transparent resin (including an acrylic resin).

The optical device 40 configured as described above internally reflects incident light and thereby forms a real image in the aerial space. The optical device 40 forms an aerial image at a position in front of the device surface.

(1-3) Block Configuration of Aerial Display Apparatus 1

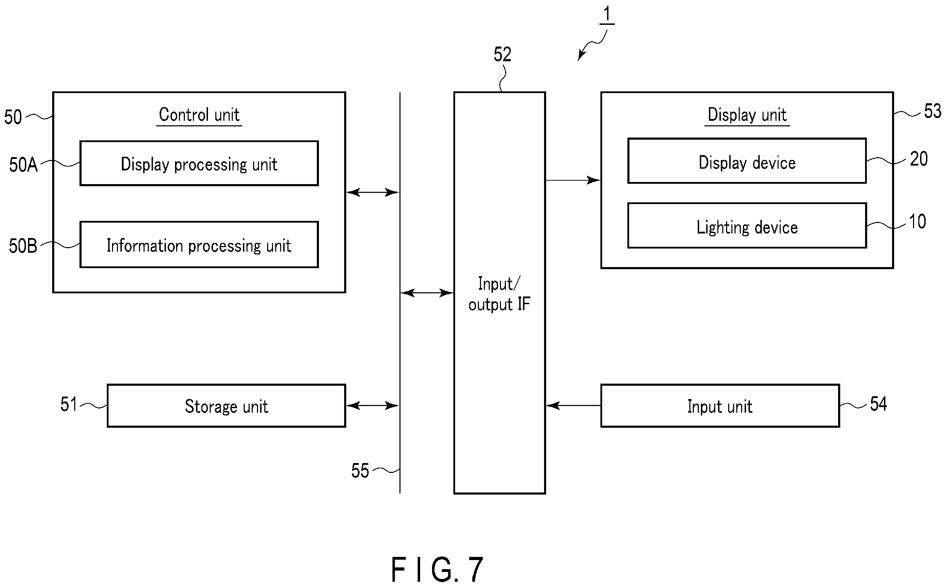

FIG. 7 is a block diagram of the aerial display apparatus 1. The aerial display apparatus 1 includes a control unit 50, a storage unit 51, an input/output interface (input/output IF) 52, a display unit 53, and an input unit 54. The control unit 50, the storage unit 51, and the input/output interface 52 are connected to each other via a bus 55.

The input/output interface 52 is connected to the display unit 53 and the input unit 54. The input/output interface 52 performs interface processing corresponding to a predetermined standard respectively on the display unit 53 and the input unit 54.

The display unit 53 includes the lighting device 10 and the display device 20. The display unit 53 displays an image.

The control unit 50 is configured by one or more processors such as a central processing unit (CPU) or a micro processing unit (MPU). The control unit 50 realizes various functions by executing programs stored in the storage unit 51. The control unit 50 includes a display processing unit 50A and an information processing unit 50B.

The display processing unit 50A controls the operation of the display unit 53 (in particular, the lighting device 10 and the display device 20). The display processing unit 50A controls ON and OFF of the lighting device 10. The display processing unit 50A transmits an image signal to the display device 20 to cause the display device 20 to display an image.

The information processing unit 50B produces an image to be displayed by the aerial display apparatus 1. The information processing unit 50B can use image data stored in the storage unit 51. The information processing unit 50B may acquire image data from the outside by using a communication function (not shown).

The storage unit 51 includes a nonvolatile storage device such as a read only memory (ROM), a hard disk drive (HDD), and a solid state drive (SSD), and a volatile storage device such as a random access memory (RAM) and a register. The storage unit 51 stores programs executed by the control unit 50. The storage unit 51 stores various data necessary for control of the control unit 50. The storage unit 51 stores data of an image to be displayed by the aerial display apparatus 1.

The input unit 54 includes a touch panel, buttons, and the like, and receives information input by the user. The information processing unit 50B can select an image to be displayed on the display unit 53 based on information received by the input unit 54.

(2) Operation of Aerial Display Apparatus 1

Next, the operation of the aerial display apparatus 1 configured as above will be described.

The arrows in FIG. 2 represent optical paths. As shown in FIG. 2, the light is emitted from an arbitrary point "∘" on the device surface of the display device 20 in a radial manner with the normal direction as the center. The light emitted from the point "o" of the display device 20 is incident on the alignment control device 30.

A portion of the light component that is within a predetermined angular range including the normal direction among the light incident on the alignment control device 30 is incident on the refractive surface 33 of the alignment control device 30. The light incident on the refractive surface 33 of the optical element 32 is refracted by the refractive surface 33, and is further refracted by the upper surface of the alignment control device 30. Then, the light component in a predetermined angular range defined around the angle $\theta_1$ is emitted from the alignment control device 30.

On the other hand, a portion of the light component that is traveling to the left side and the right side of the predetermined angular range among the light incident on the alignment control device 30 is incident on the light shielding layer 35 of the alignment control device 30 and is shielded by the light shielding layer 35. Therefore, a portion of the unnecessary light not contributing to the production of the aerial image among the light incident on the alignment control device 30 is not transmitted through the alignment control device 30.

The light emitted from the alignment control device 30 and traveling in the right oblique direction is incident on the optical device 40. The optical device 40 forms an image of the incident light in the aerial space on the side opposite to the alignment control device 30 and displays an aerial image 2 in the aerial space.

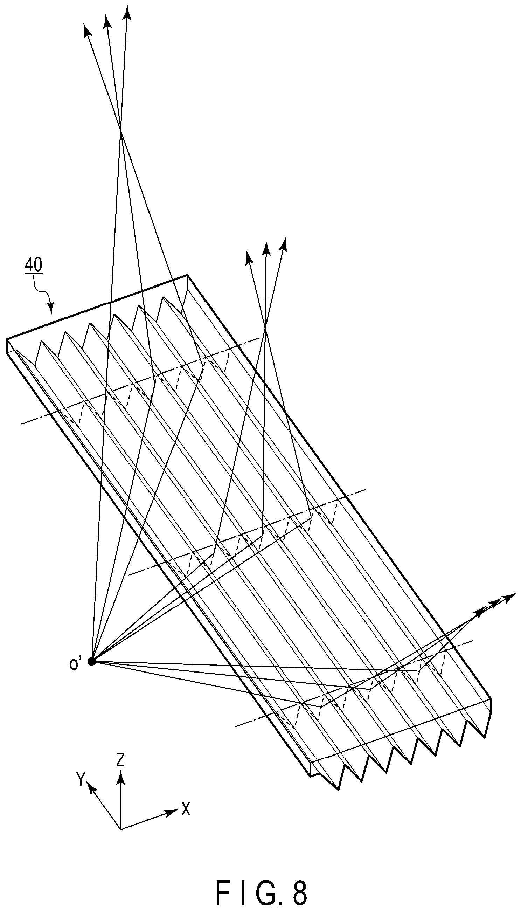

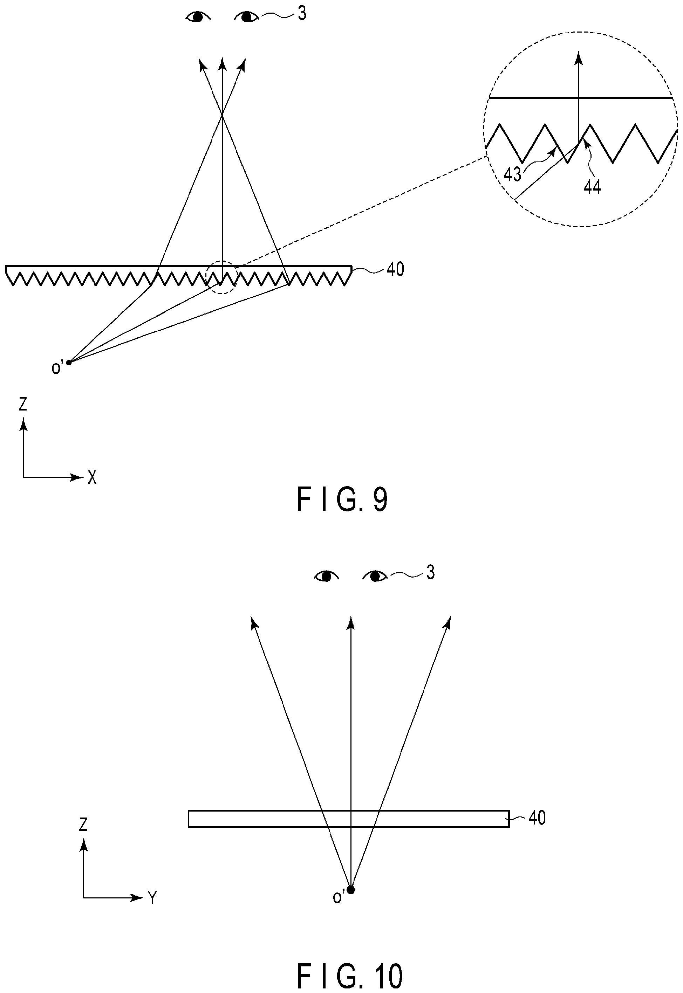

FIG. 8 is a perspective view illustrating the state of light reflection on the optical device 40. FIG. 9 is an XZ-plane side view illustrating the state of light reflection on the optical device 40. In FIG. 9, the optical device 40 is viewed with both eyes (i.e., a line connecting both eyes) of the viewer 3 being parallel to the X direction. FIG. 10 is a YZ-plane side view illustrating the state of light reflection on the optical device 40. In FIG. 10, the optical device 40 is viewed with both eyes of the viewer 3 being parallel to the Y direction.

The light emitted from an arbitrary point "∘'" of the alignment control device 30 enters the incident surfaces 43 of the optical device 40 and reaches the reflection surfaces 44. The light that has reached the reflection surfaces 44 to have an angle larger than the critical angle with respect to the normal direction of the reflection surfaces 44 is totally reflected on the reflection surfaces 44 and is output from the side of the plane of the optical device 40 opposite to the side of the optical elements 42. The critical angle denotes the smallest angle of incidence beyond which total reflection occurs. The critical angle is the angle relative to the normal of the incident surface.

In the XZ plane of FIG. 9, the light emitted from the point "∘'" is totally reflected on the reflection surfaces 44 of the optical elements 42. The light produces an aerial image in the aerial space.

In the YZ plane of FIG. 10, the light emitted from the point "o'" is not reflected on the reflection surfaces 44 of the optical elements 42, performing no image formation in the aerial space. The light therefore does not contribute to the formation of an aerial image.

That is, the condition under which the viewer 3 can recognize an aerial image is when both eyes of the viewer 3 are parallel to the X direction or approximately parallel (e.g., ±10 degrees with respect to the X direction). Furthermore, in the state of both eyes of the viewer 3 being parallel to or approximately parallel to the X direction, if the viewpoint is shifted along the Y direction, an aerial image can always be recognized.

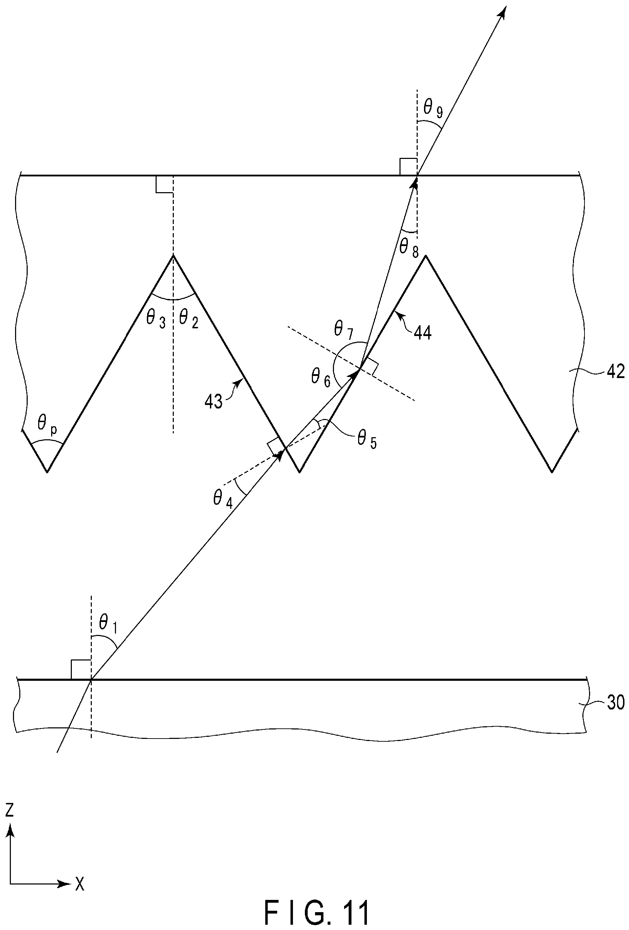

FIG. 11 is a diagram illustrating angular conditions of the incident surface 43 and the reflection surface 44 of the optical device 40.

It is assumed that the angle of the incident surface 43 with respect to the Z direction (the direction perpendicular to the device surface) is $\theta_2$, the angle of the reflection surface 44 with respect to the Z direction is $\theta_3$, and the angle between the incident surface 43 and the reflection surface 44 is $\theta_p$. The angle $\theta_p$ can be expressed by the following equation (1):

$$\theta_p = \theta_2 + \theta_3 \qquad (1)$$

The light emitted from the alignment control device 30 at the angle $\theta_1$ is incident on the incident surfaces 43. It is assumed that the refractive index of the material of the optical device 40 is $n_p$, and the refractive index of air is 1. On the incident surface 43, the incident angle is $\theta_4$, and the refraction angle is $\theta_5$. On the reflection surface 44, the incident angle is $\theta_6$, and the refraction angle is $\theta_7$ $(=\theta_6)$. On the upper surface of the optical device 40, the incident angle is $\theta_8$, and the refraction angle is $\theta_9$. The refraction angle $\theta_9$ is the output angle. The output angle $\theta_9$ can be expressed by the following equation (2):

$$\theta_9 = \sin^{-1}(n_p * \sin(\sin^{-1}((1/n_p) * \sin(90° - (\theta_1 + \theta_2))) + \theta_2 + 2\theta_3 - 90°)) \qquad (2)$$

The critical angle of the reflection surface 44 can be

$$\text{critical angle} < \theta_6(=\theta_7)$$
$$\text{critical angle} = \sin^{-1}(1/n_p) \qquad (3)$$

expressed by the following equation (3):

That is, the incident angle $\theta_6$ on the reflection surface 44 is set to be larger than the critical angle on the reflection surface 44. In other words, the angle $\theta_3$ of the reflection surface 44 is determined such that the incident angle of the light incident on the reflection surface 44 is larger than the critical angle.

The light incident on the incident surface 43 is set so as to cause no total reflection on the incident surface 43. In other words, the angle $\theta_2$ of the incident surface 43 is determined such that the incident angle of the light incident on the incident surface 43 is smaller than the critical angle.

The angle between the device surface of the optical device 40 and the plane of the aerial image 2 and the distance between the device surface of the optical device 40 and the plane of the aerial image 2 can be adjusted by optimally setting the angle $\theta_1$ of the light incident on the optical device 40, the refractive index of the optical device 40, the angle $\theta_2$ of the incident surface 43 of the optical device 40, and the angle $\theta_3$ of the reflection surface 44 of the optical device 40.

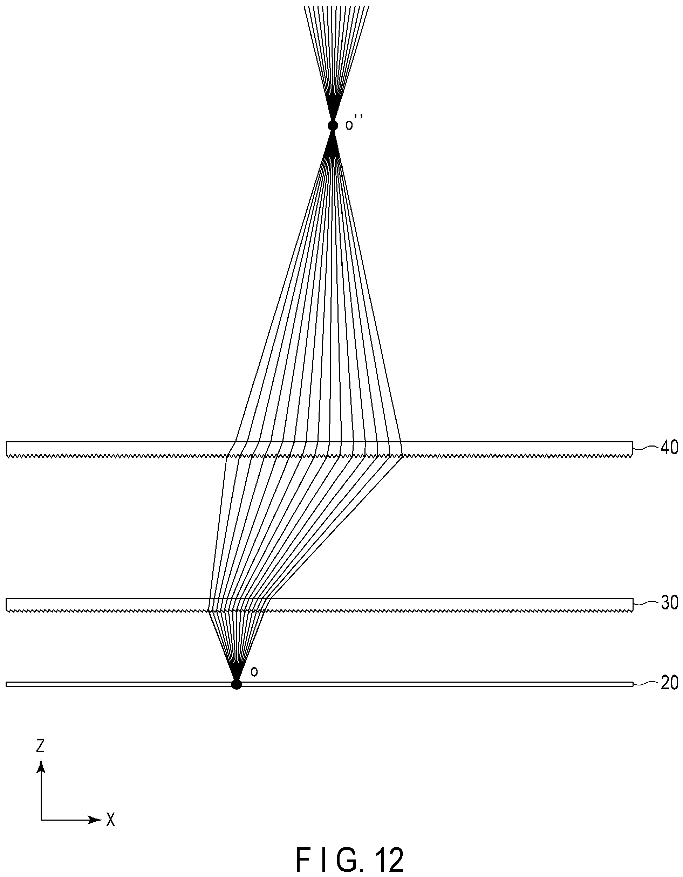

FIG. 12 is a ray tracing diagram of the aerial display apparatus 1.

The light is emitted from an arbitrary point "∘" on the device surface of the display device 20 in a radial manner with the normal direction as the center. The light incident from the display device 20 to the alignment control device 30 is refracted by the alignment control device 30 and transmitted through the alignment control device 30.

As can be seen from FIG. 12, from the alignment control device 30, the light components of a direction inclined to the right side from the normal direction are output. Since the light components on the left and right sides of the light components emitted from the alignment control device 30 are shielded by the light shielding layer 35 of the alignment control device 30, most of them are not transmitted through the alignment control device 30.

The light obliquely incident from the alignment control device 30 to the optical device 40 is reflected in the front direction by the optical device 40. The light reflected by the optical device 40 forms an image at the point "∘'". The position of the point "∘'" is the position where the aerial image 2 is displayed.

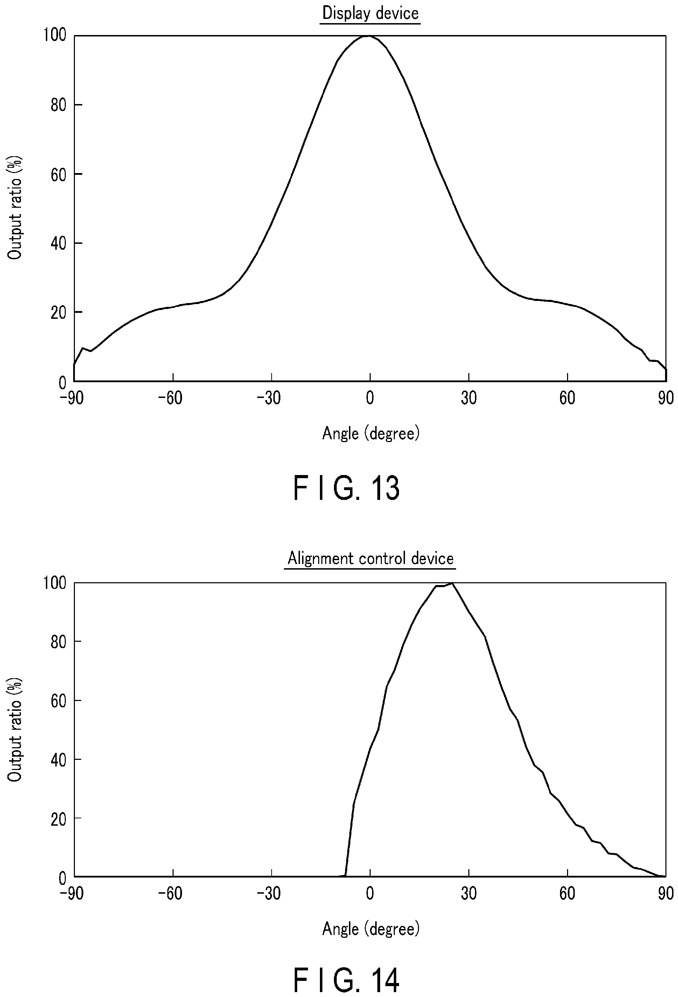

FIG. 13 is a graph illustrating a light distribution characteristic of the display device 20. The horizontal axis of FIG. 13 represents the angle (in degrees) at which the viewer observes the display device 20 along the X direction, and the vertical axis represents the light output ratio (as a percentage). The angle of 0 degrees corresponds to the case where the display device 20 is viewed from the normal direction (front). The light distribution characteristic of the lighting device 10 is also substantially the same as in the graph of FIG. 13.

The output ratio (light intensity) is the highest when the display device 20 is viewed at an angle of 0°. The output ratio decreases as the angle at which the display device 20 is viewed increases.

FIG. 14 is a graph illustrating a light distribution characteristic of the alignment control device 30. The horizontal axis of FIG. 14 represents the angle (in degrees) at which the viewer observes the alignment control device 30 along the X direction, and the vertical axis represents the light output ratio (as a percentage). FIG. 14 is a graph for a case where light having the light distribution characteristic shown in FIG. 13 enters the alignment control device 30 from the display device 20.

The light distribution characteristic of the alignment control device 30 has a peak of the light intensity at an angle of approximately 25 degrees. With the angle of 25 degrees being centered, the output ratio decreases as the viewing angle moves away from the center. A light intensity of 60% or more is obtainable in an angular range of 5 degrees to 45 degrees.

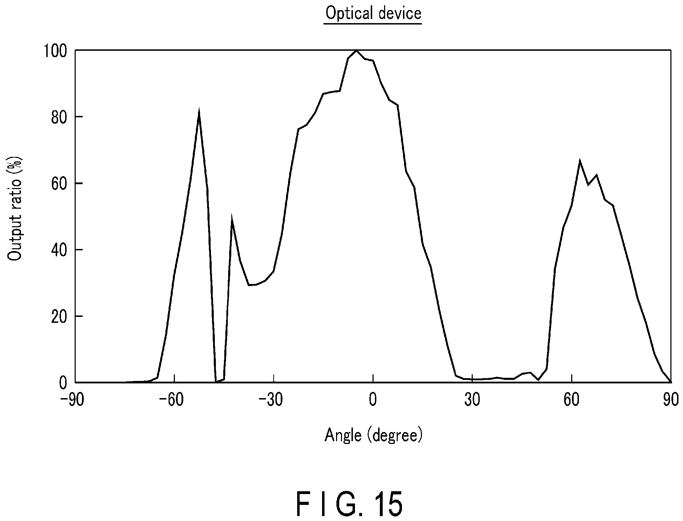

FIG. 15 is a graph illustrating a light distribution characteristic of the optical device 40. The horizontal axis of FIG. 15 represents the angle (in degrees) at which the viewer observes the optical device 40 along the X direction, and the vertical axis represents the light output ratio (as a percentage). FIG. 15 is a graph for a case where light having the light distribution characteristic shown in FIG. 14 enters the optical device 40 from the alignment control device 30.

In the light distribution characteristic of the optical device 40, the peak of the light intensity is included in the angular range of -10 degrees to 5 degrees. That is, when viewing the aerial display apparatus 1 from the normal direction (front), the viewer 3 can visually recognize the aerial image 2 more clearly. In addition, a sufficiently high light intensity can be obtained even at an angle of -25 degrees to 10 degrees. Therefore, the aerial display apparatus 1 can display an aerial image having a predetermined viewing angle.

(3) Method of Manufacturing Alignment Control Device 30

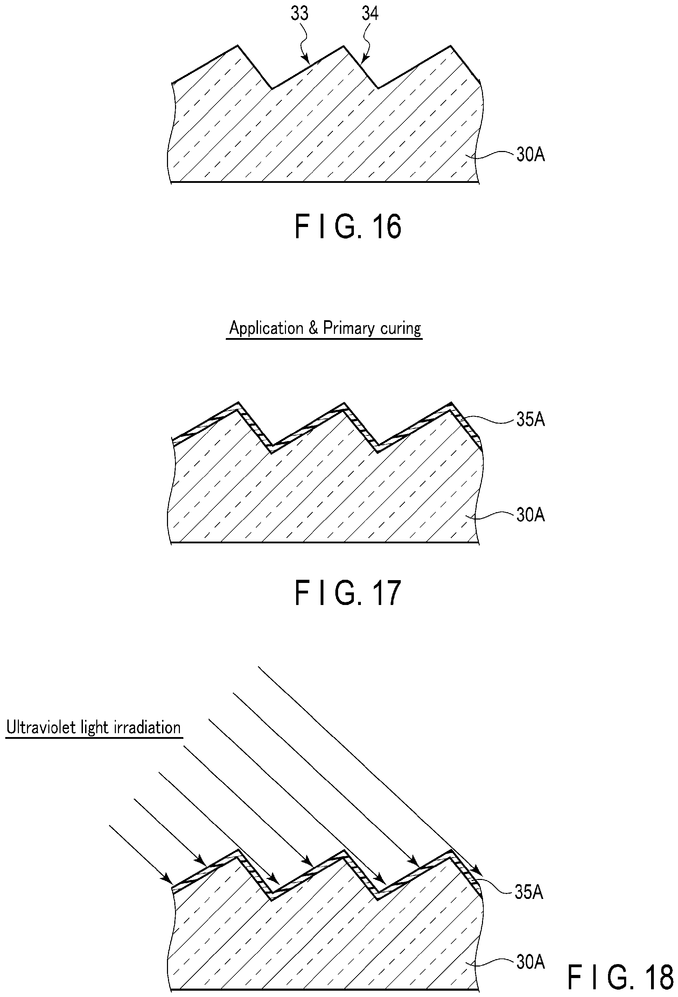

Next, a method of manufacturing the alignment control device 30 will be described. FIGS. 16 to 21 are cross-sectional views illustrating a method of manufacturing the alignment control device 30.

As shown in FIG. 16, an alignment control device 30 provided with no light shielding layer 35 is prepared. The alignment control device 30 provided with no light shielding layer 35 will be referred to as an alignment control device member 30A. The alignment control device member 30A is a member including a base member 31 and a plurality of optical elements 32. The alignment control device member 30A has a plurality of refractive surfaces 33 and a plurality of light shielding surfaces 34 alternately arranged. The alignment control device member 30A is formed of a transparent material, for example, glass or a transparent resin (including an acrylic resin). The alignment control device member 30A is manufactured using an arbitrary manufacturing method. In the manufacturing process, for example, the alignment control device member 30A is arranged such that the refractive surfaces 33 and the light shielding surfaces 34 face upward.

Subsequently, as shown in FIG. 17, a black UV-(ultraviolet ray) curing coating material 35A is uniformly applied onto the refractive surfaces 33 and the light shielding surfaces 34. The UV-curing coating material 35A is made of a resin that is cured when irradiated with ultraviolet light. The UV-curing coating material 35A contains a black dye or pigment. The UV-curing coating material 35A is a positive resin in which an exposed portion is easily dissolved in a developing solution.

Subsequently, the UV-curing coating material 35A is subjected to a primary curing treatment (pre-baking). The primary curing treatment is a heat treatment. By the primary curing treatment, the solvent contained in the UV-curing coating material 35A is evaporated. Thereby, the UV-curing coating material 35A is dried and cured.

Subsequently, as shown in FIG. 18, the UV-curing coating material 35A is irradiated with ultraviolet light from an oblique direction so that the UV-curing coating material 35A on the refractive surface 33 is irradiated with ultraviolet light. The ultraviolet light irradiation step is performed at an angle at which the UV-curing coating material 35A on the refractive surface 33 is irradiated with ultraviolet light and the UV-curing coating material 35A on the light shielding surface 34 is not irradiated with ultraviolet light. Specifically, the UV-curing coating material 35A is irradiated with ultraviolet light at an angle equal to or slightly larger than the inclination angle of the light shielding surface 34 with respect to the normal direction.

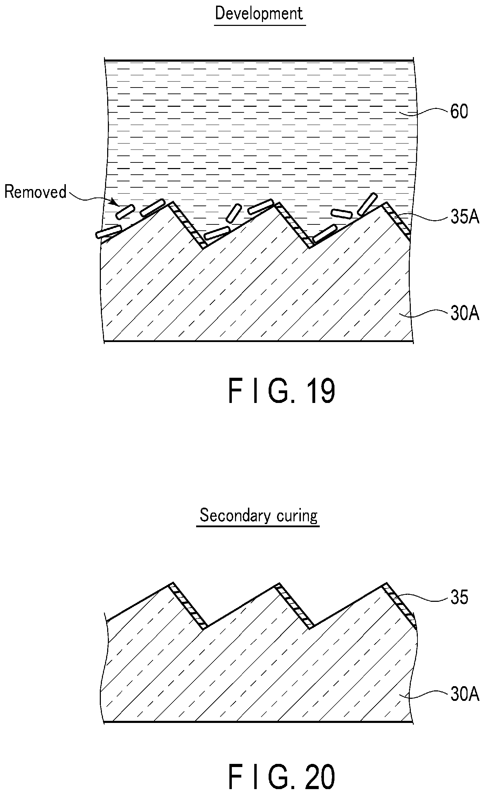

Subsequently, as shown in FIG. 19, the UV-curing coating material 35A is developed. That is, the UV-curing coating material 35A is immersed in a developing solution 60 to remove a photosensitive portion (the UV-curing coating material 35A on the refractive surface 33).

Subsequently, as shown in FIG. 20, the UV-curing coating material 35A is subjected to a secondary curing treatment (post-baking). The secondary curing treatment is a heat treatment. By the secondary curing treatment, the light shielding layer 35 is dried, and the adhesiveness of the light shielding layer 35 is improved.

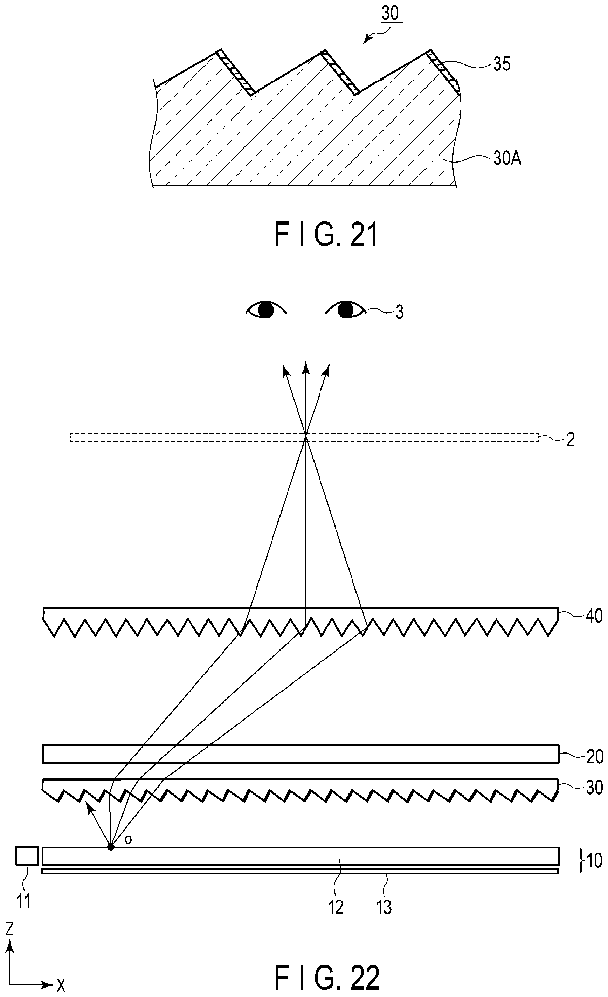

In this manner, as shown in FIG. 21, the alignment control device 30 having the light shielding layer 35 is formed.

(4) Modification

Next, a modification of the aerial display apparatus 1 will be described. FIG. 22 is an XZ-plane side view of the aerial display apparatus 1 according to the modification. The alignment control device 30 may be disposed between the lighting device 10 and the display device 20. The same operation as that of the above-described embodiment can be realized in the aerial display apparatus 1 according to the modification.

(5) Effects of Embodiment

According to the embodiment of the present invention, the light emitted from the display device 20 is reflected on the optical device 40, and thus the aerial image 2 can be displayed in an aerial space. Moreover, it is possible to display the aerial image 2 in the front direction of the aerial display apparatus 1. In addition, it is possible to realize an aerial display apparatus 1 capable of improving a display quality.

Furthermore, the alignment control device 30 refracts light emitted from the display device 20 in a direction oblique to a normal direction orthogonal to the plane. This allows the optical device 40 to receive light in the oblique direction, thereby improving the display quality of the aerial image 2.

The alignment control device 30 can also shield a portion of unnecessary light that does not contribute to the display of the aerial image 2 among the light emitted from the display device 20. This can improve a display quality of the aerial image 2.

In addition, the viewer 3 can visually recognize an aerial image when observing the optical device 40 in a state of both his/her eyes being parallel to or approximately parallel to the X direction (i.e., the direction of the optical elements 42 being aligned). Furthermore, an aerial image can be continuously recognized when the viewer 3 shifts the viewpoint along the Y direction in a state of both his/her eyes being parallel to or approximately parallel to the X direction. That is, it is possible to secure a viewing angle in a state of both eyes of the viewer 3 being parallel to or approximately parallel to the X direction.

In addition, a plurality of devices constituting the aerial display apparatus 1 can be arranged in parallel. This can realize an aerial display apparatus 1 that is downsized in the Z direction.

In the embodiments described above, the left side surface of the optical element 42 is defined as the incident surface 43 and the right side surface is defined as the reflection surface 44. The invention is not limited thereto, and the incident surface 43 and the reflection surface 44 may be configured reversely. In this case, the positional relationship between the refractive surface 33 and the light shielding surface 34 of the alignment control device 30 is also reversed. Furthermore, the operation of the aerial display apparatus 1 described in the embodiment is also reversed in the horizontal direction.

In the embodiments described above, the liquid crystal display device is described as an example of the display device 20, but the display device 20 is not limited to this, and various types of display elements can be used. As the display device 20, for example, a self-luminous organic electroluminescence (EL) display device, a micro-light-emitting diode (microLED) display device, or the like can be used. In the microLED display device, light in red (R), green (G), and blue (B) that constitutes a pixel is respectively emitted by an LED. In a case where the self-luminous display device 20 is used, the lighting device 10 is not necessary.

The present invention is not limited to the above embodiments, and various modifications can be made without departing from the gist of the present invention at an implementation stage. In addition, the embodiments may be appropriately combined with each other, and in such a case, combined effects can be attained. Furthermore, various inventions are included in the above-described embodiments, and various inventions can be extracted by combining selected ones of the disclosed structural components. Even if some structural components are omitted from the structural components shown in the embodiment, the configuration without these structural components can be extracted as an invention if the problem can be solved and the effects can be attained.

REFERENCE SIGNS LIST

| | |
|---|---|
| 1 | Aerial display apparatus |
| 2 | Aerial image |
| 3 | Viewer |
| 10 | Lighting device |
| 11 | Light source unit |
| 12 | Light guide plate |
| 13 | Reflective sheet |
| 20 | Display device |
| 30 | Alignment control device |
| 30A | Alignment control device member |
| 31 | Base member |
| 32 | Optical element |
| 33 | Refractive surface |
| 34 | Light shielding surface |
| 35 | Light shielding layer |
| 35A | UV-curing coating material |
| 40 | Optical device |
| 41 | Base member |
| 42 | Optical element |
| 43 | Incident surface |
| 44 | Reflection surface |
| 50 | Control unit |
| 50A | Display processing unit |
| 50B | Information processing unit |
| 51 | Storage unit |
| 52 | Input/output interface |
| 53 | Display unit |
| 54 | Input unit |
| 55 | Bus |
| 60 | Developing solution |

**Claims**

1. An aerial display apparatus comprising:

   a display device configured to display an image;
   an alignment control device arranged to receive light emitted from the display device and configured to refract the light emitted from the display device in an oblique direction to a normal direction orthogonal to a plane; and
   an optical device arranged to receive the light emitted from the alignment control device and configured to reflect the light emitted from the alignment control device to a side opposite to the alignment control device to form an aerial image in an aerial space.

2. The aerial display apparatus according to claim 1, wherein
   the alignment control device transmits a portion of a light component that is in an angular range including the normal direction among the light emitted from the display device.

3. The aerial display apparatus according to claim 2, wherein

the alignment control device includes a planar first base member, a plurality of first optical elements provided below the first base member, each extending in a first direction and aligned in a second direction orthogonal to the first direction, and a plurality of light shielding layers each provided on the first optical elements and configured to shield light,

each of the first optical elements has a refractive surface and a light shielding surface which are inclined with respect to the normal direction and are in contact with each other, and

each of the light shielding layers is provided on the light shielding surface.

4. The aerial display apparatus according to claim 3, wherein
an angle of the refractive surface is larger than an angle of the light shielding surface.

5. The aerial display apparatus according to claim 1, wherein
the optical device reflects light incident from the alignment control device in the oblique direction in the normal direction.

6. The aerial display apparatus according to claim 5, wherein

the optical device includes a planar second base member, and a plurality of second optical elements provided below the second base member, each extending in a first direction and aligned in a second direction orthogonal to the first direction, and

each of the second optical elements has an incident surface and a reflection surface which are inclined with respect to the normal direction and are in contact with each other.

7. The aerial display apparatus according to claim 1, wherein
the display device, the alignment control device, and the optical device are arranged in parallel to each other.

8. The aerial display apparatus according to claim 1, further comprising a lighting device configured to produce light, wherein the display device is arranged to receive light from the lighting device and is configured by a liquid crystal display device.

F I G. 1

EP 4 535 067 A1

# FIG. 2

FIG. 3

FIG. 4

F I G. 5

F I G. 6

EP 4 535 067 A1

F I G. 7

EP 4 535 067 A1

F I G. 8

F I G. 9

F I G. 10

F I G. 11

F I G. 12

Display device

## F I G. 13

Alignment control device

## F I G. 14

Optical device

F I G. 15

33    34

F I G. 16

Application & Primary curing

35A

30A

F I G. 17

Ultraviolet light irradiation

35A

30A

F I G. 18

Development

60

Removed

35A

30A

F I G. 19

Secondary curing

35

30A

F I G. 20

F I G. 21

F I G. 22

<div align="center">**INTERNATIONAL SEARCH REPORT**</div>

| International application No. |
| --- |
| **PCT/JP2023/018048** |

**A. CLASSIFICATION OF SUBJECT MATTER**

*G02B 30/56*(2020.01)i
FI: G02B30/56

According to International Patent Classification (IPC) or to both national classification and IPC

**B. FIELDS SEARCHED**

Minimum documentation searched (classification system followed by classification symbols)

G02B30/56 ; G02B5/00 - 5/136

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2021-139932 A (TOPPAN PRINTING CO., LTD.) 16 September 2021 (2021-09-16) paragraphs [0008]-[0056], fig. 1-11 | 1-5, 7-8 |
| Y | JP 2010-160360 A (SUMITOMO ELECTRIC FINE POLYMER, INC.) 22 July 2010 (2010-07-22) paragraphs [0006]-[0007], [0014]-[0025], fig. 1-3 | 1-5, 7-8 |
| Y | JP 2005-55736 A (SHARP CORP.) 03 March 2005 (2005-03-03) paragraphs [0006], [0037]-[0048], fig. 1-3 | 1-5, 7-8 |
| A | JP 2022-63376 A (TOPPAN PRINTING CO., LTD.) 22 April 2022 (2022-04-22) paragraphs [0022]-[0032], [0058]-[0061], fig. 1-3, 10-11 | 6 |

☐ Further documents are listed in the continuation of Box C. ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **04 July 2023** | **18 July 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2023/018048**

| Patent document cited in search report | | | Publication date (day/month/year) | Patent family member(s) | Publication date (day/month/year) |
|---|---|---|---|---|---|
| JP | 2021-139932 | A | 16 September 2021 | US 2022/0413317 A1 paragraphs [0023]-[0074], fig. 1-11<br>WO 2021/177271 A1<br>EP 4116761 A1<br>CN 115280222 A | |
| JP | 2010-160360 | A | 22 July 2010 | US 2011/0128470 A1 paragraphs [0016]-[0017], [0188]-[0198], fig. 17-19<br>WO 2009/128443 A1<br>EP 2270556 A1<br>KR 10-2010-0135295 A<br>CN 102007434 A | |
| JP | 2005-55736 | A | 03 March 2005 | (Family: none) | |
| JP | 2022-63376 | A | 22 April 2022 | WO 2022/080173 A1 paragraphs [0022]-[0032], [0058]-[0061], fig. 1-3, 10-11 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011191404 A

- JP 2011175297 A